# EUROPÄISCHE PATENTSCHRIFT

(11) **EP 3 124 771 B1**
(45) Veröffentlichungstag und Bekanntmachung des Hinweises auf die Patenterteilung: **04.11.2020**
(21) Anmeldenummer: 16177582.0
(22) Anmeldetag: 01.07.2016
(51) Int. Cl.: F02C 7/14, F02C 7/224, F02C 7/32, F02C 7/06

(54) **FLUGTRIEBWERK MIT EINER TREIBSTOFFVERSORGUNGSEINRICHTUNG UND MIT WENIGSTENS EINEM EINEN HYDRAULIKFLUIDSPEICHER UMFASSENDEN HYDRAULIKFLUIDKREISLAUF MIT EINEM WÄRMETAUSCHER**
AIRCRAFT ENGINE COMPRISING A FUEL SUPPLYING DEVICE AND HYDRAULICS FLUID CIRCUIT COMPRISING AT LEAST ONE HYDRAULIC FLUID RESERVOIR WITH A HEAT EXCHANGER
GROUPE MOTOPROPULSEUR COMPRENANT UN DISPOSITIF D'ALIMENTATION EN CARBURANT ET AU MOINS UN CIRCUIT DE FLUIDE HYDRAULIQUE COMPRENANT UN DISPOSITIF DE STOCKAGE DE FLUIDE HYDRAULIQUE COMPRENANT UN ECHANGEUR THERMIQUE

(30) Priorität: 28.07.2015 DE 102015112325
(43) Veröffentlichungstag der Anmeldung: 01.02.2017
(73) Patentinhaber: Rolls-Royce Deutschland Ltd & Co KG, 15827 Blankenfelde-Mahlow (DE)
(72) Erfinder: Beier, Jürgen, 15827 Blankenfelde-Mahlow (DE); Schacht, Michael, 15827 Blankenfelde-Mahlow (DE); Rohde, Christian, 15827 Blankenfelde-Mahlow (DE)
(74) Vertreter: Schmidt, Martin Michael

(56) Entgegenhaltungen:
- EP-A2- 2 447 507
- JP-A- 2001 317 376
- US-A1- 2013 291 514

## Beschreibung

Die Erfindung betrifft ein Flugtriebwerk mit einer Treibstoffversorgungseinrichtung und mit wenigstens einem einen Hydraulikfluidspeicher umfassenden Hydraulikfluidkreislauf mit einem Wärmetauscher gemäß der im Oberbegriff des Patentanspruchs 1 näher definierten Art.

Aus der Praxis bekannte Flugtriebwerke weisen üblicherweise neben einer Treibstoffversorgungseinrichtung wenigstens einen Hydraulikfluidkreislauf auf, der mit wenigstens einem Hydraulikfluidspeicher ausgebildet ist. Zusätzlich sind derartige Flugtriebwerke jeweils mit mindestens einem Wärmetauscher ausgeführt, in dessen Bereich Wärmeenergie zwischen dem im Hydraulikfluidkreislauf geführten Hydraulikfluid und Treibstoff der Treibstoffversorgungseinrichtung austauschbar ist. Um im Fehlerfall einen Übertritt von Treibstoff in den Hydraulikfluidkreislauf sicher zu vermeiden, ist der Druck im Hydraulikfluidkreislauf im Bereich des Wärmetauschers größer als der Druck in der Treibstoffversorgungseinrichtung.

Nachteilhafterweise sind die vorgenannten verschiedenen Komponenten eines Flugtriebwerks in unterschiedlichen und voneinander beabstandeten Bereichen innerhalb eines Gehäuses eines Flugtriebwerks angeordnet und jeweils über eine Vielzahl mit vergleichsweise großer Länge ausgeführten Treibstoff bzw. Hydraulikfluid führenden Leitungen miteinander gekoppelt, weshalb bekannte Flugtriebwerke jeweils durch ein hohes Eigengewicht gekennzeichnet sind, hohe Herstellkosten verursachen und einen komplexen konstruktiven Aufbau aufweisen.

Aus der JP 2001 317376 A ist ein Flugtriebwerk mit einer Zusatzantriebseinheit bekannt, die ein Getriebe umfasst. Im Getriebe ist eine Schmiereinrichtung angeordnet, die mit wenigstens einem Ölfilter und mit einem Ölkühler ausgeführt ist. Dadurch sollen die Leitungslängen der Schmiereinrichtung und die Abmessungen des Strahltriebwerks E reduziert werden. Im Bereich des Ölkühlers findet im Betrieb des Strahltriebwerkes ein Wärmeaustausch zwischen dem Öl und dem Treibstoff für das Flugtriebwerk statt.

Das Öl wird in einem Öltank gespeichert und von der Förderpumpe der Ölpumpe unter Druck gesetzt. Das Schmieröl wird vom zu schmierenden Bereich des Strahltriebwerkes von der Spülpumpe der Ölpumpe in den Öltank gefördert.

Der vorliegenden Erfindung liegt daher die Aufgabe zugrunde, ein geringes Bauteilgewicht aufweisendes und kostengünstig herstellbares Flugtriebwerk zu schaffen, das zudem einen möglichst einfachen konstruktiven Aufbau aufweist.

Erfindungsgemäß wird diese Aufgabe mit einem Flugtriebwerk mit den Merkmalen des Patentanspruches 1 gelöst.

Das erfindungsgemäße Flugtriebwerk umfasst eine Treibstoffversorgungseinrichtung und wenigstens einen einen Hydraulikfluidspeicher umfassenden Hydraulikfluidkreislauf sowie einen Wärmetauscher, in dessen Bereich Wärmeenergie zwischen dem im Hydraulikfluidkreislauf geführten Hydraulikfluid und Treibstoff der Treibstoffversorgungseinrichtung austauschbar ist. Der Druck im Hydraulikfluidkreislauf ist im Bereich des Wärmetauschers größer als der Druck in der Treibstoffversorgungseinrichtung.

Erfindungsgemäß ist der Wärmetauscher mit dem Hydraulikfluidspeicher verbunden, wobei äußere Wandungen des Wärmetauschers und äußere Wandungen des Hydraulikfluidspeichers einen Überlappungsbereich zwischen dem Wärmetauscher und dem Hydraulikfluidspeicher gegenüber einer Umgebung des Wärmetauschers und des Hydraulikfluidspeichers zumindest teilweise abschirmen.

Dadurch ist das erfindungsgemäße Flugtriebwerk zumindest im Bereich zwischen dem Hydraulikfluidspeicher, dem Wärmetauscher und der Treibstoffversorgungseinrichtung mit kürzeren Verbindungsleitungen ausführbar und das erfindungsgemäße Flugtriebwerk im Vergleich zu bekannten Flugtriebwerken mit einem geringeren Eigengewicht sowie kostengünstiger herstellbar. Zusätzlich sind sowohl das Eigengewicht als auch die Herstellkosten dadurch reduziert, dass der Wärmetauscher und der Hydraulikfluidspeicher im Überlappungsbereich bzw. im Überdeckungsbereich jeweils in geringerem Umfang gegen mechanische Beschädigungen und thermische Belastungen auszulegen und zu sichern sind. Daher sind Gehäusewände des Hydraulikfluidspeichers und/oder des Wärmetauschers im Überdeckungsbereich zwischen dem Hydraulikfluidspeicher und dem Wärmetauscher jeweils mit geringeren Wandstärken ausführbar.

Bei einer vorteilhaften Ausführungsform des erfindungsgemäßen Flugtriebwerks sind die äußeren Wandungen des Hydraulikfluidspeichers und des Wärmetauschers jeweils feuerfest ausgebildet. Dadurch ist gewährleistet, dass sowohl der Innenraum des Wärmetauschers als auch der Innenraum des Hydraulikfluidspeichers im Fehlerfall des Flugtriebwerks ausreichend gegenüber thermischen Belastungen geschützt sind. Im Vergleich zu bekannten Flugtriebwerken, bei welchen das Gehäuse des Hydraulikfluidspeichers und auch das Gehäuse des Wärmetauscher vollumfänglich aus feuerfestem Material ausgeführt sind, sind der Hydraulikfluidspeicher und/oder der damit verbundene Wärmetauscher des erfindungsgemäßen Flugtriebwerks im Überdeckungsbereich zwischen dem Hydraulikfluidspeicher und dem Wärmetauscher mit einer gegenüber einer feuerfest ausgeführten Wandung konstruktiv einfacheren und kostengünstigeren Begrenzungswand ausbildbar, die ein geringeres Eigengewicht aufweist.

Ein Innenraum des Hydraulikspeichers ist bei einer ebenfalls durch ein geringes Eigengewicht gekennzeichneten Weiterbildung des erfindungsgemäßen Flugtriebwerkes vom Innenraum des Wärmetauschers durch eine gemeinsame Wandung auf kostengünstige Art und Weise bei gleichzeitig geringem Materialeinsatz getrennt.

Ist der Wärmetauscher über eine Flanscheinrichtung mit dem Hydraulikfluidspeicher verbunden, ist das erfindungsgemäße Flugtriebwerk mit geringem Aufwand montierbar.

Weist der Hydraulikfluidkreislauf eine Hydraulikpumpe auf, deren Saugseite zumindest mit dem Hydraulikfluidspeicher und deren Förderseite mit dem Wärmetauscher verbunden ist, ist das Hydraulikfluid im Hydraulikfluidkreislauf im gewünschten Umfang aus dem Hydraulikfluidspeicher in Richtung des Wärmetauschers und durch diesen hindurch führbar.

Bei einer Weiterbildung des erfindungsgemäßen Flugtriebwerkes ist das von der Hydraulikpumpe dem Wärmetauscher zuführbare Hydraulikfluid vom Wärmetauscher in Richtung von Lagerkammern des Flugtriebwerks weiterleitbar. Damit sind im Bereich der Lagerkammern angeordnete Lagereinheiten des erfindungsgemäßen Flugtriebwerks einerseits mit Schmiermittel versorgbar und andererseits temperierbar.

Steht die Saugseite der Hydraulikpumpe mit einem Ölsumpf einer Hilfsgerätegetriebeeinrichtung in Verbindung, ist das Volumen des Hydraulikfluidspeichers in gewünschtem Umfang begrenzbar und im Bereich der Hilfsgerätegetriebeeinrichtung vorgesehenes Hydraulikfluid durch den Wärmetauscher führbar und im gewünschten Umfang temperierbar.

Bei einer weiteren vorteilhaften und durch eine hohe Integrationstiefe gekennzeichneten Ausführungsform des erfindungsgemäßen Flugtriebwerks ist die Hilfsgerätegetriebeeinrichtung über die Hydraulikpumpe ausgehend vom Wärmetauscher mit Hydraulikfluid beaufschlagbar.

Ist die Saugseite der Hydraulikpumpe mit den Lagerkammern des Flugtriebwerks verbunden, ist im Bereich der Lagerkammern vorhandenes Hydraulikfluidvolumen mit geringem konstruktiven Aufwand aus dem Bereich der Lagerkammern abführbar.

Wenn die Förderseite der Hydraulikpumpe mit dem Hydraulikfluidspeicher gekoppelt ist, ist beispielsweise aus dem Bereich der Lagerkammern über die Hydraulikpumpe abgeführtes Hydraulikfluidvolumen direkt in den Hydraulikfluidspeicher einleitbar, ohne dieses zuvor durch den Wärmetauscher zu führen.

Bei einer weiteren durch eine hohe Integrationstiefe gekennzeichneten Ausführungsform des erfindungsgemäßen Flugtriebwerks ist ein weiterer Hydraulikfluidkreislauf mit einem weiteren Hydraulikfluidspeicher vorgesehen, wobei eine Saugseite einer Hydraulikpumpe des weiteren Hydraulikfluidkreislaufes mit dem weiteren Hydraulikfluidspeicher und eine Förderseite der Hydraulikpumpe mit dem Wärmetauscher in Verbindung steht. Bei dieser Ausführungsform des erfindungsgemäßen Flugtriebwerkes besteht zusätzlich die Möglichkeit, im Bereich des Wärmetauschers Wärmeenergie zwischen dem Treibstoff der Treibstoffversorgungseinrichtung und dem Hydraulikfluid des Hydraulikfluidkreislaufes und/oder dem Hydraulikfluid des weiteren Hydraulikfluidkreislaufes auszutauschen und das Hydraulikfluid des Hydraulikfluidkreislaufes und/oder des weiteren Hydraulikfluidkreislaufes im gewünschten Umfang zu temperieren.

Ist die Förderseite der Hydraulikpumpe des weiteren Hydraulikfluidkreislaufes über den Wärmetauscher mit dem Generator des Flugtriebwerkes verbunden, der wiederum mit der Saugseite der Hydraulikpumpe und dem weiteren Hydraulikfluidspeicher gekoppelt ist und in dessen Bereich vorzugsweise elektrische Energie erzeugbar ist, ist der Generator über das im weiteren Hydraulikfluidkreislauf geführte Hydraulikfluid wiederum anforderungsgemäß temperierbar.

Umfasst die Treibstoffversorgungseinrichtung eine Treibstoffpumpeneinheit, über die Treibstoff aus einem Treibstoffspeicher durch den Wärmetauscher führbar ist, ist der Wärmeübergang im Bereich des Wärmetauschers im gewünschten Umfang beeinflussbar.

Ist Treibstoff von der Treibstoffpumpeneinheit aus dem Wärmetauscher in Richtung des Treibstoffspeichers und in Richtung einer Treibstoffaufbereitungseinheit sowie von dort in Richtung einer Flugtriebwerksbrennkammer führbar, ist beispielsweise ein Vereisen von einen Treibstoffspeicher eines Flugzeuges aufnehmenden Tragfläche eines Flugzeuges durch entsprechende Temperierung des im Treibstoffspeicher vorhandenen Treibstoffes mit geringem Aufwand vermeidbar und der Treibstoff mit einer zur Darstellung konstanter Betriebszustände erforderlichen konstanten Temperatur in Richtung der Flugtriebwerksbrennkammer führbar bzw. in diesem Bereich mit einer konstanten Betriebstemperatur zur Verfügung stellbar.

Bei einer weiteren durch eine hohe Integrationstiefe gekennzeichneten Ausführungsform des erfindungsgemäßen Flugtriebwerks ist zumindest eine zwischen der Hydraulikfluidpumpe und dem Hydraulikfluidspeicher verlaufende Hydraulikfluidleitung in den einen Deckel des Hydraulikfluidspeichers darstellenden Wärmetauscher, in den einen Deckel des Wärmetauschers darstellenden Hydraulikfluidspeicher und/oder in ein im Überlappungsbereich zwischen dem Wärmetauscher und dem Hydraulikfluidspeicher zwischen diesen angeordneten und mit diesen verbundenes Zwischenelement integriert, wodurch der Hydraulikfluidspeicher und/oder der Wärmetauscher konstruktiv einfacher ausführbar ist bzw. sind.

Darüber hinaus ist es bei einer mit geringem Aufwand montierbaren Ausführungsform des erfindungsgemäßen Flugtriebwerks vorgesehen, dass im Zwischenelement Leitungsbereiche vorgesehen sind, die in Abhängigkeit des jeweils vorliegenden Anwendungsfalles jeweils Schnittstellen mit dem Wärmetauscher, dem Hydraulikfluidspeicher, der Hydraulikpumpe, der Hilfsgerätegetriebeeinrichtung und/oder der Treibstoffversorgungseinrichtung aufweisen.

Ein solches Zwischenelement stellt dann ein sogenanntes Adapterelement dar, über welches einerseits die mechanische Verbindung im Bereich zwischen den Gehäusen des Wärmetauschers und dem Hydraulikfluidspeicher und andererseits eine fluidische Kopplung zwischen dem Wärmetauscher, dem Hydraulikfluidspeicher, der Hydraulikpumpe, der Hilfsgerätegetriebeeinrichtung und/oder der Treibstoffversorgungseinrichtung realisiert werden kann.

Des Weiteren kann es auch vorgesehen sein, dass die den Innenraum des Wärmetauschers vom Innenraum des Hydraulikfluidspeichers trennende Begrenzungswand bzw. Wandung ein Teil des Zwischenelementes ist, die lediglich eine Vermischung von im Hydraulikfluidkreislauf geführtem Hydraulikfluid und von im Bereich der Treibstoffversorgungseinrichtung geführtem Treibstoff verhindert. Ein der Umgebung des Wärmetauschers und des Hydraulikfluidspeichers zugewandter Bereich des Zwischenelementes ist dann wiederum entsprechend thermisch und mechanisch beständig, vorzugsweise feuerfest ausgeführt.

Des Weiteren besteht auch die Möglichkeit, dass das Zwischenelement so zwischen dem Wärmetauscher und dem Hydraulikfluidspeicher angeordnet ist, dass sowohl der Wärmetauscher als auch der Hydraulikfluidspeicher lediglich mit dem Zwischenelement verbunden sind und somit über das Zwischenelement miteinander in Wirkverbindung stehen. Zusätzlich kann es auch vorgesehen sein, dass der Wärmetauscher und der Hydraulikfluidspeicher entweder direkt miteinander oder über das Zwischenelement verbunden sind und das Zwischenelement zumindest teilweise innerhalb des Wärmetauschers und/oder des Hydraulikfluidspeichers angeordnet ist.

Sowohl die in den Patentansprüchen angegebenen Merkmale als auch die in den nachfolgenden Ausführungsbeispielen des erfindungsgemäßen Flugtriebwerks angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Flugtriebwerks ergeben sich aus den Patentansprüchen und den nachfolgend unter Bezugnahme auf die Zeichnung prinzipmäßig beschriebenen Ausführungsbeispielen, wobei in der nachfolgenden Beschreibung der verschiedenen Ausführungsbeispiele zugunsten der Übersichtlichkeit für bau- und funktionsgleiche Bauteile dieselben Bezugszeichen verwendet werden .

Es zeigt:
- Fig. 1: eine stark schematisierte Längsschnittansicht eines Flugtriebwerkes mit einer in einem Gehäuse angeordneten Hilfsgerätegetriebeeinrichtung;
- Fig. 2: eine schematisierte Darstellung eines Hydraulikfluidkreislaufes mit einem Hydraulikfluidspeicher, mit einer Treibstoffversorgungseinrichtung und mit einem Wärmetauscher des Flugtriebwerkes gemäß Fig. 1;
- Fig. 3 bis Fig. 7: mehrere stark vereinfachte Darstellungen des Wärmetauschers, des Hydraulikfluidspeichers und eines optionalen Zwischenelementes verschiedener Ausführungsformen des erfindungsgemäßen Strahltriebwerks
- Fig. 8: eine Teilschnittansicht des Hydraulikfluidspeichers des Hydraulikfluidkreislaufes und des daran angeordneten Wärmetauschers gemäß Fig. 2;
- Fig. 9: eine dreidimensionale teiltransparente Darstellung des Wärmetauschers gemäß Fig. 2 in einer ersten Ansicht; und
- Fig. 10: eine Fig. 9 entsprechende Darstellung des Wärmetauschers aus einer zweiten Ansicht.

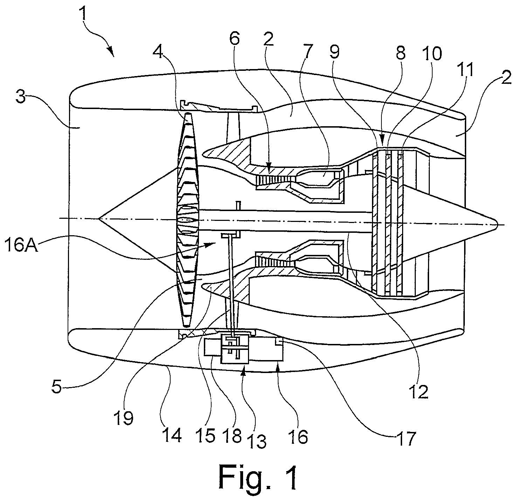

Fig. 1 zeigt ein Flugtriebwerk 1 in einer Längsschnittansicht. Das Flugtriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Flugtriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einer Flugtriebwerksbrennkammer bzw. einem Brenner 7 mit einer Flugtriebwerksbrennkammer und einer Turbineneinrichtung 8 ausgeführt ist.

Die Turbineneinrichtung 8 weist vorliegend drei Rotorvorrichtungen 9, 10 und 11 auf, welche mit im Wesentlichen vergleichbarer Bauweise ausgebildet sind und mit einer Triebwerksachse 12 verbunden sind.

Eine Hilfsgerätegetriebeeinrichtung 13 ist in einem äußeren Triebwerksgehäuse 14 angeordnet, das den Nebenstromkanal 2 begrenzt und den äußeren Umfangsbereich des Flugtriebwerks 1 darstellt. Die Hilfsgerätegetriebeeinrichtung 13 ist vorliegend über eine in radialer Richtung des Flugtriebwerks 1 verlaufende Antriebswelle 15 über ein inneres Getriebe 16A mit der Triebwerksachse 12 verbunden und wird somit von der Triebwerksachse 12 im Betrieb des Flugtriebwerkes 1 angetrieben bzw. mit Drehmoment versorgt. Von der Hilfsgerätegetriebeeinrichtung 13 werden verschiedene Nebenaggregate 16 sowie ein Ölabscheider 17, der auch als Breather bezeichnet wird, in gewünschtem Umfang mit Drehmoment beaufschlagt. Zusätzlich ist im Bereich der Hilfsgerätegetriebeinrichtung 13 auch ein Öltank bzw. ein Hydraulikfluidspeicher 18 vorgesehen, aus dem Hydraulikfluid zur Kühlung und Schmierung verschiedener Bereiche des Flugtriebwerks 1, wie Lagereinrichtungen, Zahnradpaarungen des inneren Getriebes 16A und der Hilfsgerätegetriebeeinrichtung 13 sowie weiterer zu kühlender und zu schmierender Baugruppen des Flugtriebwerks 1, entnommen wird.

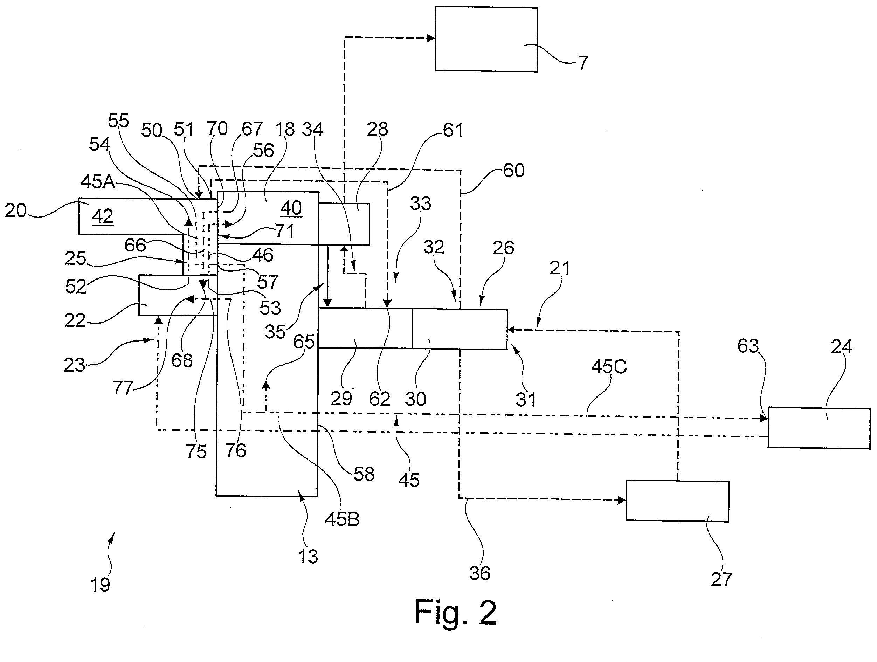

Hierfür ist das Flugtriebwerk 1 in Fig. 2 schematisch dargestelltem Umfang mit einem den Hydraulikfluidspeicher 18 umfassenden Hydraulikfluidkreislauf 19 und mit einem Wärmetauscher 20 ausgebildet, in dessen Bereich Wärmeenergie zwischen dem im Hydraulikfluidkreislauf 19 geführten Hydraulikfluid und im Bereich einer Treibstoffversorgungseinrichtung 21 geführtem Treibstoff austauschbar ist.

Der Druck im Hydraulikfluidkreislauf ist im Bereich des Wärmetauschers 20 bzw. im Bereich des Treibstoff führenden Bereiches des Wärmetauschers 20 kleiner als im Hydraulikfluid führenden Bereich des Wärmetauschers 20, um eventuelle Leckagen ausgehend von der Treibstoffversorgungseinrichtung 21 in Richtung des Hydraulikfluidkreislaufes 19 sicher zu vermeiden.

Der Hydraulikfluidkreislauf 19 umfasst neben dem Hydraulikfluidspeicher 18 eine Hydraulikpumpe 22, deren Saugseite 23 über eine durch den Wärmetauscher 20 verlaufende Leitung 66 mit dem Hydraulikfluidspeicher 18, über eine durch den Wärmetauscher 20 verlaufende Leitung 75 mit der Hilfsgerätegetriebeeinrichtung 13 und über eine Leitung 78 mit Lagerkammern 24 verbunden ist. Zusätzlich ist eine Förderseite der Hydraulikpumpe 22 über eine Leitung 25 mit dem Wärmetauscher 20, über eine vorzugsweise durch den Wärmetauscher 20 verlaufende Leitung 46 mit dem Hydraulikfluidspeicher 18 und darüber hinaus über den Wärmetauscher 20 und die Leitung 45 mit der Hilfsgerätegetriebeeinrichtung 13 und den Lagerkammern 24 verbunden.

Dabei weist die Leitung 66 eine Schnittstelle 68 zur Hydraulikpumpe 22 und eine Schnittstelle 67 zum Hydraulikfluidspeicher 18 auf, während die Leitung 75 im Bereich einer Schnittstelle 76 mit der Hilfsgerätegetriebeeinrichtung 13 wirkverbunden ist und im Bereich einer Schnittstelle 77 mit der Hydraulikpumpe 22 in Verbindung steht. Die Leitung 25 verläuft zwischen einer Schnittstelle 54 mit dem Wärmetauscher 20 und einer Schnittstelle 52 mit der Hydraulikpumpe 22. Zusätzlich weist die Leitung 46 mit dem Hydraulikfluidspeicher 18 eine Schnittstelle 56 und mit der Hydraulikpumpe 22 eine Schnittstelle 53 auf.

Über einen Einlassbereich 55 eines ersten Leitungsbereiches 45A der den Wärmetauscher 20 mit den Lagerkammern 24 verbindenden Leitung 45 gelangt Hydraulikfluid im Bereich des Wärmetauschers 20 in den ersten Leitungsbereich 45A, der sich ausgehend vom Wärmetauscher 20 bis zu einem weiteren Leitungsabschnitt 45B erstreckt, der im Innenraum der Hilfsgerätegetriebeeinrichtung 13 verläuft und eine Schnittstelle 65 aufweist, über die die Hilfsgetriebeeinrichtung 13 mit Hydraulikfluid versorgt wird. Die Leitung 45 wird im Bereich einer Schnittstelle 57 aus dem Wärmetauscher 20 heraus und in den Innenraum der Hilfsgerätegetriebeeinrichtung 13 hinein geführt.

Im Bereich einer weiteren Schnittstelle 58 tritt die Leitung 45 aus dem Inneren der Hilfsgerätegetriebeeinrichtung 13 in Richtung der Lagerkammern 24 aus, wobei ein dritter Leitungsabschnitt 45C der Leitung 45 im Bereich einer weiteren Schnittstelle 63 in die Lagerkammern 24 mündet.

Die Treibstoffversorgungseinrichtung 21 stellt im Wesentlichen einen Treibstoffkreislauf dar, der neben einer Treibstoffpumpeneinheit 26 einen Treibstoffspeicher 27 und eine Treibstoffaufbereitungseinheit 28 umfasst. Um im Bereich des Treibstoffspeichers 27 gespeicherten Treibstoff sowohl in Richtung des Wärmetauschers 20 als auch in Richtung der Treibstoffaufbereitungseinheit 28 führen zu können, umfasst die Treibstoffpumpeneinheit 26 eine Hochdruckpumpe 29 und eine Niederdruckpumpe 30. Eine Saugseite 31 der Niederdruckpumpe 30 steht mit dem Treibstoffspeicher 27 in Verbindung, während eine Förderseite 32 der Niederdruckpumpe 30 über eine Leitung 60 mit dem Wärmetauscher 20 gekoppelt ist, die im Bereich 50 in den Wärmetauscher 20 mündet. Im Betrieb des Flugtriebwerkes 1 wird über die Niederdruckpumpe 30 Treibstoff aus dem Treibstoffspeicher 27 angesaugt und über die Leitung 60 dem Wärmetauscher 20 zugeführt. Im Bereich des Wärmetauschers 20 wird bei entsprechend vorliegendem Temperaturgefälle zwischen dem zugeführten Treibstoff und dem ebenfalls dem Wärmetauscher 20 zugeführten Hydraulikfluid des Hydraulikfluidkreislaufes 19 Wärmeenergie ausgetauscht, wobei das aus dem Wärmetauscher 20 ausströmende Hydraulikfluid in der in Fig. 2 dargestellten Art und Weise sowohl in die Hilfsgerätegetriebeeinrichtung 13 als auch zu den Lagerkammern 24 weitergeleitet wird.

Der ebenfalls im Bereich des Wärmetauschers 20 temperierte Treibstoffvolumenstrom wird im Bereich einer Saugseite 33 der Hochdruckpumpe 29 über eine Leitung 61, die zwischen einem Austrittsbereich 51 aus dem Wärmetauscher 20 und einem Eintrittsbereich 62 der Hochdruckpumpe 29 verläuft, angesaugt und im Bereich einer Förderseite 34 der Hochdruckpumpe 29 der Treibstoffaufbereitungseinheit 28 zugeführt. Dort wird in Abhängigkeit des aktuell vorliegenden Treibstoffbedarfes zumindest ein Teil des von der Hochdruckpumpe 29 zur Verfügung stehenden und im Bereich des Wärmetauschers 20 temperierten Treibstoffes in Richtung des Brenners 7 weitergeleitet, während ein aktuell nicht benötigter Treibstoffvolumenstrom über eine Rückführleitung 35 der Treibstoffpumpeneinheit 26 zugeführt wird. Zusätzlich ist die Treibstoffpumpeneinheit 26 förderseitig im Bereich der Niederdruckpumpe 30 wiederum mit dem Treibstoffspeicher 27 wirkverbunden, womit ebenfalls im Bereich des Wärmetauschers 20 temperierter Treibstoff über eine Treibstoffrückführleitung 36 in den Treibstoffspeicher 27 einleitbar ist.

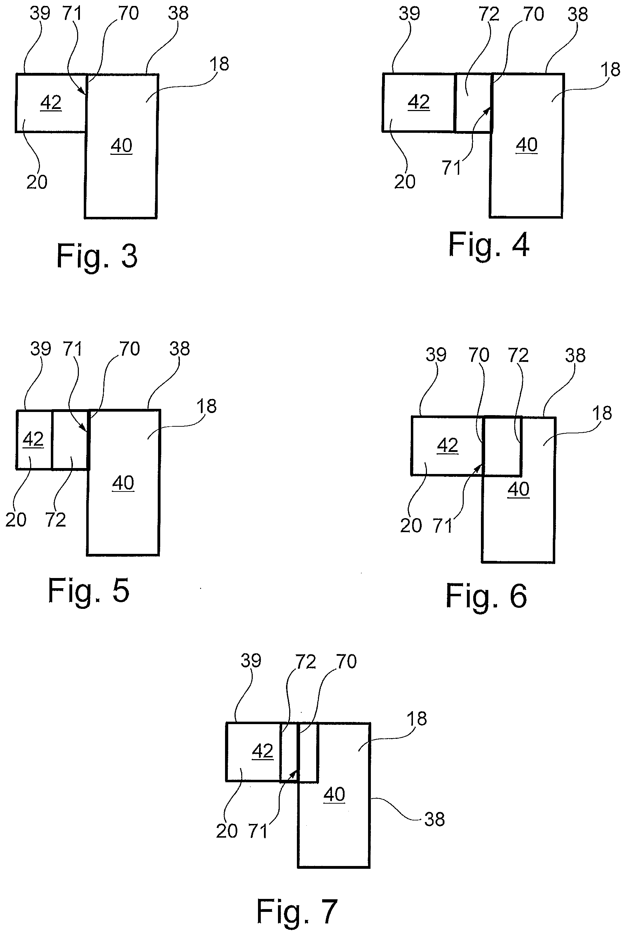

Fig. 3 zeigt den Hydraulikfluidspeicher 18 und den daran direkt angeordneten Wärmetauscher 20 in stark schematisierter Form. Bei dieser Ausführungsform des Flugtriebwerkes 1 ist der Wärmetauscher 20 im Bereich seines Gehäuses 39 mit einem Gehäuse 38 des Hydraulikfluidspeichers 18 vorzugsweise über eine Verschraubung fest verbunden. Eine einen Innenraum 42 des Wärmetauschers 20 vom Innenraum 40 des Hydraulikfluidspeichers 18 trennende Wandung 70 ist entweder mit dem Gehäuse 38 des Hydraulikfluidspeichers 18 oder mit dem Gehäuse 39 des Wärmetauschers 20 verbunden. Zusätzlich besteht auch die Möglichkeit, dass sowohl der Wärmetauscher 20 als auch der Hydraulikfluidspeicher 18 eine im Überlappungsbereich 71 zwischen dem Wärmetauscher 20 und dem Hydraulikfluidspeicher 18 verlaufende Wandung aufweisen, die in miteinander verbundenem Betriebszustand des Wärmetauschers 20 und des Hydraulikfluidspeichers 18 aneinander anliegen.

Unabhängig davon, ob die Wandung 70 als Teil des Wärmetauschers 20, als Teil des Hydraulikfluidspeichers 18 oder als separates Bauteil ausgeführt ist, ist die Wandung 70 im Vergleich zum Gehäuse 38 des Hydraulikfluidspeichers 18 und des Gehäuses 39 des Wärmetauschers 20 lediglich mit einer derartigen Wandstärke ausgeführt, dass ein Übertritt von Hydraulikfluid aus dem Hydraulikfluidkreislauf 19 in den Treibstoffkreislauf des Flugtriebwerkes 1 sowie ein Austritt von Treibstoff aus dem Treibstoffkreislauf des Flugtriebwerkes 1 in Richtung des Hydraulikfluidkreislaufes 19 sicher verhindert ist, während der Innenraum 42 des Wärmetauschers 20 und der Innenraum 40 des Hydraulikfluidspeichers 18 durch das Gehäuse 39 des Wärmetauschers 20 und das Gehäuse 38 des Hydraulikfluidspeichers 40 gegenüber umweltseitige mechanische und thermische Belastungen im erforderlichen Umfang geschützt ist.

Fig. 4 zeigt eine Fig. 3 entsprechende Darstellung einer weiteren Ausführungsform des Flugtriebwerks 1, bei der zwischen dem Wärmetauscher 20 und dem Hydraulikfluidspeicher 18 ein Zwischenelement 72 angeordnet ist, in dem beispielsweise die zu Fig. 2 beschriebenen Verbindungsleitungen zwischen der Hydraulikpumpe 22, dem Wärmetauscher 20, der Hilfsgerätegetriebeeinrichtung 13 und/oder dem Hydraulikfluidspeicher 18 zumindest bereichsweise anordenbar sind, die jeweils Schnittstellen mit dem Wärmetauscher 20, dem Hydraulikfluidspeicher 18, der Hydraulikpumpe 22, der Hilfsgerätegetriebeeinrichtung 13 und/oder der Treibstoffversorgungseinrichtung 14 aufweisen.

Bei der in Fig. 4 gezeigten Ausführungsform ist das Zwischenelement 72 im Überlappungsbereich 71 zwischen dem Wärmetauscher 20 und dem Hydraulikfluidspeicher 18 angeordnet. Der Wärmetauscher 20 ist im Bereich seines Gehäuse 39 mit dem Zwischenelement 72 verbunden, während der Hydraulikfluidspeicher 18 im Bereich seines Gehäuses 38 an dem Zwischenelement 72 angebunden ist, womit der Wärmetauscher 20 und der Hydraulikfluidspeicher 18 über das Zwischenelement 72 die gewünschte Einheit bilden. Die den Innenraum 42 des Wärmetauschers 20 vom Innenraum 40 des Hydraulikfluidspeichers 18 trennende Wandung 70 kann entweder ein Teil des Zwischenelementes 72 oder ein Teil des Hydraulikfluidspeichers 18 sein und ist vorzugsweise im Anlagebereich 73 zwischen dem Zwischenelement 72 und dem Hydraulikfluidspeicher 18 vorgesehen.

Fig. 5 zeigt wiederum eine weitere Ausführungsform des Flugtriebwerkes 1 in einer Fig. 3 entsprechenden Darstellung, bei der die Gehäuse 39 und 38 des Wärmetauschers 20 und des Hydraulikfluidspeichers 18 direkt miteinander verbunden sind. Das Zwischenelement 72 ist bei der Ausführungsform gemäß Fig. 5 vollständig im Innenraum 42 des Wärmetauschers 20 angeordnet und stellt ein separates Bauteil dar. Bei einer hierzu alternativen und in Fig. 6 dargestellten weiteren Ausführungsform des Flugtriebwerkes 1, bei der der Wärmetauscher 20 und der Hydraulikfluidspeicher 18 wiederum direkt im Bereich der Gehäuse 39 und 38 miteinander verbunden sind, ist das Zwischenelement 72 im Innenraum 40 des Hydraulikfluidspeichers 18 im Überdeckungsbereich 71 zwischen dem Wärmetauscher 20 und dem Hydraulikfluidspeicher 18 angeordnet.

Bei einer wiederum weiteren Ausführungsform des erfindungsgemäßen Flugtriebwerkes 1 ist das Zwischenelement 72 im Überdeckungsbereich 71 zwischen dem Wärmetauscher 20 und dem Hydraulikfluidspeicher 18 zu einem Teil im Innenraum des Wärmetauschers 42 und zum anderen Teil im Innenraum 40 des Hydraulikfluidspeichers 18 angeordnet, wobei der Wärmetauscher 20 im Bereich seines Gehäuses 39 wiederum direkt mit dem Gehäuse 38 des Hydraulikfluidspeichers 18 verbunden ist.

In Abhängigkeit des jeweils vorliegenden Anwendungsfalles besteht auch die Möglichkeit, dass der Wärmetauscher 20 bei einer Weiterbildung des in Fig. 4 dargestellten Ausführungsbeispiels des Strahltriebwerkes 1 über das Zwischenelement 72 mit dem Wärmetauscher 20 verbunden ist und das Zwischenelement 72 entweder teilweise im Innenraum 42 des Wärmetauschers 20, zumindest teilweise im Innenraum 40 des Hydraulikfluidspeichers 18 oder zumindest teilweise im Innenraum 42 des Wärmetauschers 20 und zumindest teilweise im Innenraum 40 des Hydraulikfluidspeichers 18 angeordnet ist.

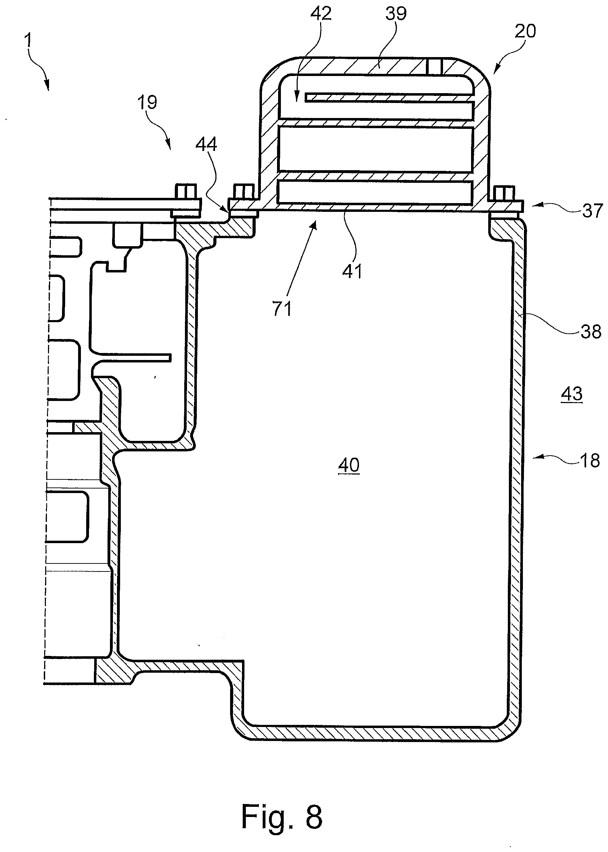

Der Wärmetauscher 20 ist in der in Fig. 3 und Fig. 8 dargestellten Art und Weise an dem Hydraulikfluidspeicher 18 angeordnet bzw. über eine Flanscheinrichtung 37 am Gehäuse 38 des Hydraulikfluidspeichers 18 angeschraubt. Das Gehäuse 38 des Hydraulikfluidspeichers 18 besteht vorliegend aus feuerfestem Material und weist eine entsprechende Wandstärke auf. Des Weiteren ist das Gehäuse 38 aus Aluminium mit einer Wandstärke von ca. 6 mm ausgeführt. Ein Gehäuse 39 des Wärmetauschers 20 besteht ebenfalls bereichsweise aus feuerfestem Material, wobei das Gehäuse 39 des Wärmetauschers 20 vorliegend ebenfalls aus Aluminium mit einer Wandstärke von etwa 6 mm gefertigt ist. Lediglich eine einen Innenraum 40 des Hydraulikfluidspeichers 18 begrenzende Gehäusewand 41 des Wärmetauschers 20, die einen Innenraum 42 des Wärmetauschers 20 vom Innenraum 40 trennt und der Wandung 70 entspricht, ist vorliegend mit einer geringeren Wandstärke ausgebildet und stellt gleichzeitig einen Teil des Gehäuses 38 des Hydraulikfluidspeichers 18 und des Gehäuses 39 des Wärmetauschers 20 dar.

Die Gehäusewand 41 ist aufgrund der Anordnung des Wärmetauschers 20 am Hydraulikfluidspeicher 18 lediglich durch den Druckunterschied zwischen dem Innenraum 42 des Wärmetauschers 20 und dem Innenraum 40 des Hydraulikfluidspeichers 18 belastet. Deshalb ist die Gehäusewand 41 mit einer geringeren Wandstärke als die direkt der Umgebung 43 des Hydraulikfluidspeichers 18 und des Wärmetauschers 20 zugewandten Gehäusebereiche des Gehäuses 38 und des Gehäuses 39 ausführbar, deren Wandstärken zum Erreichen einer Druckbeständigkeit und einer Feuerbeständigkeit wesentlich höher auszuführen sind.

Im Bereich der Flanscheinrichtung 37 ist zwischen dem Gehäuse 39 des Wärmetauschers 20 und dem Gehäuse 38 des Hydraulikfluidspeichers 18 eine Dichteinrichtung 44 vorgesehen, über die der Innenraum 40 gegenüber der Umgebung 43 abgedichtet ist.

In der in Fig. 8 näher gezeigten Art und Weise bildet das Gehäuse 39 des Wärmetauschers 20 einen Bereich der äußeren Wandung des Gehäuses 38 des Hydraulikfluidspeichers 18, womit sowohl der Wärmetauscher 20 als auch der Hydraulikfluidspeicher 18 mit geringerem Materialeinsatz und somit kostengünstiger bei gleichzeitig niedrigerem Bauteilgewicht ausführbar sind.

Generell sind das Gehäuse 39 des Wärmetauschers 20 und auch das Gehäuse 38 des Hydraulikfluidspeichers 18 aus feuerfesten Werkstoffen herstellbar, die in der Technik im Allgemeinen Werkstoffe mit einer Einsatztemperatur von über 600° C darstellen. Dabei besteht beispielsweise die Möglichkeit, das Gehäuse 39 und das Gehäuse 38 aus Aluminiumoxid oder auch aus anderen geeigneten Legierungen herzustellen. Solche sogenannte Refraktärwerkstoffe sind metallische und keramische Materialien, die ab Einsatztemperaturen von 600°C bis über 1700°C eine bestimmte thermische Beständigkeit aufweisen.

In Abhängigkeit des jeweils vorliegenden Anwendungsfalles ist der Wärmetauscher 20 als Gleich-, Gegen- oder Kreuzstromwärmetauscher mit beliebiger konstruktiver Ausgestaltung, beispielsweise als ein Rohrbündelwärmetauscher, als ein Plattenwärmetauscher oder dergleichen, ausführbar.

Zusätzlich besteht auch die Möglichkeit Bauteile des Hydraulikfluidkreislaufes 19, der Treibstoffversorgungseinrichtung 21 und/oder des Wärmetauscher 20 auf kostengünstige Art und Weise zumindest teilweise mittels eines 3D-Druckverfahrens, wie dem LMD (Laser Metal Deposition) oder SLM (Selective Laser melting), herzustellen.

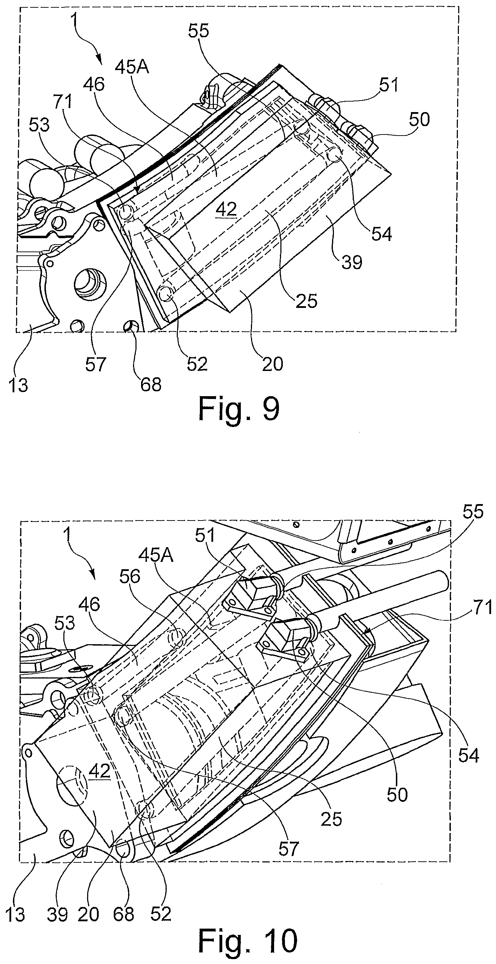

Fig. 9 und Fig. 10 zeigen jeweils eine teiltransparente Darstellung des Wärmetauschers 20 gemäß Fig. 2 und gemäß Fig. 3 aus verschiedenen Ansichten.

In Abhängigkeit des jeweils vorliegenden Anwendungsfalles sind die Leitungen zwischen der Hydraulikpumpe, dem Hydraulikfluidspeicher, dem Wärmetauscher und der Hilfsgerätegetriebeeinrichtung im Inneren des Wärmetauschers und/oder im Inneren des Zwischenelementes verlaufend angeordnet und stellen über die jeweiligen Schnittstellen in vorbeschriebenem Umfang jeweils Verbindungen zwischen der Hydraulikpumpe, dem Hydraulikfluidspeicher, dem Wärmetauscher, den Lagerkammern und der Hilfsgerätegetriebeeinrichtung her.

### Bezugszeichenliste

- 1: Flugtriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerksachse
- 13: Hilfsgerätegetriebeeinrichtung
- 14: Triebwerksgehäuse
- 15: Antriebswelle
- 16: Nebenaggregate
- 16A: inneres Getriebe
- 17: Ölabscheider
- 18: Hydraulikfluidspeicher, Öltank
- 19: Hydraulikfluidkreislauf
- 20: Wärmetauscher
- 21: Treibstoffversorgungseinrichtung
- 22: Hydraulikpumpe
- 23: Saugseite der Hydraulikpumpe 22
- 24: Lagerkammern
- 25: Förderseite der Hydraulikpumpe
- 26: Treibstoffpumpeneinheit
- 27: Treibstoffspeicher
- 28: Treibstoffaufbereitungseinheit
- 29: Hochdruckpumpe
- 30: Niederdruckpumpe
- 31: Saugseite der Niederdruckpumpe
- 32: Förderseite der Niederdruckpumpe
- 33: Saugseite der Hochdruckpumpe
- 34: Förderseite der Hochdruckpumpe
- 35: Rückführleitung
- 36: Treibstoffrückführleitung
- 37: Flanscheinrichtung
- 38: Gehäuse des Hydraulikfluidspeichers
- 39: Gehäuse des Wärmetauschers
- 40: Innenraum des Hydraulikfluidspeichers
- 41: Gehäusewand des Wärmetauschers
- 42: Innenraum des Wärmetauschers
- 43: Umgebung
- 44: Dichteinrichtung
- 45: Leitung
- 45A bis 45 C: Leitungsbereiche der Leitung 45
- 46: Hydraulikleitung
- 47: Bereich des Wärmetauschers
- 48: Hydraulikleitung
- 50: Bereich
- 51: Austrittsbereich
- 52: Schnittstelle
- 53: Schnittstelle
- 54: Schnittstelle
- 55: Einlassbereich
- 56 bis 58: Schnittstelle
- 60: Leitung
- 61: Leitung
- 62: Eintrittsbereich
- 63: Schnittstelle
- 65: Schnittstelle
- 66: Leitung
- 67,68: Schnittstelle
- 70: Wandung
- 71: Überlappungsbereich
- 72: Zwischenelement
- 73: Anlagebereich
- 75: Leitung
- 76, 77: Schnittstelle
- 78: Leitung

## Patentansprüche

1. Flugtriebwerk (1) mit einer Treibstoffversorgungseinrichtung (21) und mit wenigstens einem einen Hydraulikfluidspeicher (18) umfassenden Hydraulikfluidkreislauf (19) und mit einem Wärmetauscher (20), in dessen Bereich Wärmeenergie zwischen dem im Hydraulikfluidkreislauf geführten Hydraulikfluid und Treibstoff der Treibstoffversorgungseinrichtung (21) austauschbar ist, wobei der Druck im Hydraulikfluidkreislauf (19) im Bereich des Wärmetauschers (20) im Betrieb größer ist als der Druck in der Treibstoffversorgungseinrichtung (21), **dadurch gekennzeichnet, dass** der Wärmetauscher (20) mit dem Hydraulikfluidspeicher (18) verbunden ist, wobei äußere Wandungen (39) des Wärmetauschers (20) und äußere Wandungen (38) des Hydraulikfluidspeichers (18) einen Überlappungsbereich (71) zwischen dem Wärmetauscher (20) und dem Hydraulikfluidspeicher (18) gegenüber einer Umgebung des Wärmetauschers (20) und des Hydraulikfluidspeichers (18) zumindest teilweise abschirmen.

2. Flugtriebwerk nach Anspruch 1, **dadurch gekennzeichnet, dass** die äußere Wandung (38, 39) des Hydraulikfluidspeichers (18) und des Wärmetauschers (20) jeweils feuerfest ausgeführt sind.

3. Flugtriebwerk nach Anspruch 1 oder 2, **dadurch gekennzeichnet, dass** ein Innenraum (40) des Hydraulikspeichers (18) vom Innenraum (42) des Wärmetauschers (20) durch eine gemeinsame Wandung (41) getrennt ist.

4. Flugtriebwerk nach einem der Ansprüche 1 bis 3, **dadurch gekennzeichnet, dass** der Wärmetauscher (20) über eine Flanscheinrichtung (37) mit dem Hydraulikfluidspeicher (18) verbunden ist.

5. Flugtriebwerk nach einem der Ansprüche 1 bis 4, **dadurch gekennzeichnet, dass** der Hydraulikfluidkreislauf (19) eine Hydraulikpumpe (22) aufweist, deren Saugseite (23) zumindest mit dem Hydraulikfluidspeicher (18) und deren Förderseite (25) mit dem Wärmetauscher (20) verbunden ist.

6. Flugtriebwerk nach Anspruch 5, **dadurch gekennzeichnet, dass** das von der Hydraulikpumpe (22) dem Wärmetauscher (20) zuführbare Hydraulikfluid vom Wärmetauscher (20) in Richtung von Lagerkammern (24) des Flugtriebwerks (1) weiterleitbar ist.

7. Flugtriebwerk nach Anspruch 5 oder 6, **dadurch gekennzeichnet, dass** die Saugseite (23) der Hydraulikpumpe (22) mit einem Ölsumpf einer Hilfsgerätegetriebeeinrichtung (13) in Verbindung steht.

8. Flugtriebwerk nach Anspruch 7, **dadurch gekennzeichnet, dass** die Hilfsgerätegetriebeeinrichtung (13) über die Hydraulikpumpe (22) ausgehend vom Wärmetauscher (20) mit Hydraulikfluid beaufschlagbar ist.

9. Flugtriebwerk nach einem der Ansprüche 6 bis 8, **dadurch gekennzeichnet, dass** die Saugseite (23) der Hydraulikpumpe (22) mit den Lagerkammern (24) des Flugtriebwerks (1) verbunden ist.

10. Flugtriebwerk nach einem der Ansprüche 5 bis 9, **dadurch gekennzeichnet, dass** die Förderseite (25) der Hydraulikpumpe (22) mit dem Hydraulikfluidspeicher (18) gekoppelt ist.

11. Flugtriebwerk nach einem der Ansprüche 1 bis 10, **dadurch gekennzeichnet, dass** ein weiterer Hydraulikfluidkreislauf mit einem weiteren Hydraulikfluidspeicher vorgesehen ist, wobei eine Saugseite einer Hydraulikpumpe des weiteren Hydraulikfluidkreislaufes mit dem weiteren Hydraulikfluidspeicher und eine Förderseite der Hydraulikpumpe mit dem Wärmetauscher in Verbindung steht.

12. Flugtriebwerk nach Anspruch 11, **dadurch gekennzeichnet, dass** die Förderseite der Hydraulikpumpe des weiteren Hydraulikfluidkreislaufes über den Wärmetauscher mit einem Generator des Flugtriebwerkes verbunden ist, der wiederum mit der Saugseite der Hydraulikpumpe und dem weiteren Hydraulikfluidspeicher gekoppelt ist.

13. Flugtriebwerk nach einem der Ansprüche 1 bis 12, **dadurch gekennzeichnet, dass** die Treibstoffversorgungseinrichtung (21) eine Treibstoffpumpeneinheit (16) umfasst, über die Treibstoff aus einem Treibstoffspeicher (27) durch den Wärmetauscher (20) führbar ist.

14. Flugtriebwerk nach Anspruch 13, **dadurch gekennzeichnet, dass** Treibstoff von der Treibstoffpumpeneinheit (26) aus dem Wärmetauscher (20) in Richtung des Treibstoffspeichers (27) und in Richtung einer Treibstoffaufbereitungseinheit (28) sowie von dort in Richtung einer Flugtriebwerksbrennkammer (7) führbar ist.

15. Flugtriebwerk nach einem der Ansprüche 5 bis 14, **dadurch gekennzeichnet, dass** zumindest eine zwischen der Hydraulikpumpe (22) und dem Hydraulikfluidspeicher (18) verlaufende Hydraulikfluidleitung (48) in den einen Deckel des Hydraulikfluidspeichers (18) darstellenden Wärmetauscher (20) integriert ist.

## Claims

1. Aircraft engine (1) with a fuel supply device (21) and with at least one hydraulic fluid circuit (19) which comprises a hydraulic fluid accumulator (18), and with a heat exchanger (20), in the region of which thermal energy can be exchanged between the hydraulic fluid which is conducted in the hydraulic fluid circuit (19) and fuel of the fuel supply device (21), the pressure in the hydraulic fluid circuit (19) in the region of the heat exchanger (20) during operation being greater than the pressure in the fuel supply device (21), **characterized in that** the heat exchanger (20) is connected to the hydraulic fluid accumulator (18), wherein outer walls (39) of the heat exchanger (20) and outer walls (38) of the hydraulic fluid accumulator (18) shield at least partially an overlapping region (71) between the heat exchanger (20) and the hydraulic fluid accumulator (18) with respect to a surrounding area of the heat exchanger (20) and the hydraulic fluid accumulator (18).

2. Aircraft engine according to Claim 1, **characterized in that** the outer wall (38, 39) of the hydraulic fluid accumulator (18) and the heat exchanger (20) are in each case of fire-proof configuration.

3. Aircraft engine according to Claim 1 or 2, **characterized in that** an interior space (40) of the hydraulic accumulator (18) is separated from the interior space (42) of the heat exchanger (20) by way of a common wall (41).

4. Aircraft engine according to one of Claims 1 to 3, **characterized in that** the heat exchanger (20) is connected via a flange device (37) to the hydraulic fluid accumulator (18).

5. Aircraft engine according to one of Claims 1 to 4, **characterized in that** the hydraulic fluid circuit (19) has a hydraulic pump (22), the suction side (23) of which is connected at least to the hydraulic fluid accumulator (18) and the delivery side (25) of which is connected to the heat exchanger (20).

6. Aircraft engine according to Claim 5, **characterized in that** the hydraulic fluid which can be fed to the heat exchanger (20) by the hydraulic pump (22) can be forwarded from the heat exchanger (20) in the direction of bearing chambers (24) of the aircraft engine (1).

7. Aircraft engine according to Claim 5 or 6, **characterized in that** the suction side (23) of the hydraulic pump (22) is connected to an oil sump of an auxiliary gear box device (13).

8. Aircraft engine according to Claim 7, **characterized in that** the auxiliary gear box device unit transmission device (13) can be loaded with hydraulic fluid coming from the heat exchanger (20) via the hydraulic pump (22).

9. Aircraft engine according to one of Claims 6 to 8, **characterized in that** the suction side (23) of the hydraulic pump (22) is connected to the bearing chambers (24) of the aircraft engine (1).

10. Aircraft engine according to one of Claims 5 to 9, **characterized in that** the delivery side (25) of the hydraulic pump (22) is coupled to the hydraulic fluid accumulator (18).

11. Aircraft engine according to one of Claims 1 to 10, **characterized in that** a further hydraulic fluid circuit with a further hydraulic fluid accumulator is provided, wherein a suction side of a hydraulic pump of the further hydraulic fluid circuit is connected to the further hydraulic fluid accumulator, and a delivery side of the hydraulic pump is connected to the heat exchanger.

12. Aircraft engine according to Claim 11, **characterized in that** the delivery side of the hydraulic pump of the further hydraulic fluid circuit is connected via the heat exchanger to a generator of the aircraft engine which is in turn coupled to the suction side of the hydraulic pump and the further hydraulic fluid accumulator.

13. Aircraft engine according to one of Claims 1 to 12, **characterized in that** the fuel supply device (21) comprises a fuel pump unit (16), via which fuel can be conducted out of a fuel storage means (27) through the heat exchanger (20).

14. Aircraft engine according to Claim 13, **characterized in that** fuel can be conducted by the fuel pump unit (26) out of the heat exchanger (20) in the direction of the fuel storage means (27) and in the direction of a fuel conditioning unit (28), and from there in the direction of an aircraft engine combustion chamber (7).

15. Aircraft engine according to one of Claims 5 to 14, **characterized in that** at least one hydraulic fluid line (48) which runs between the hydraulic pump (22) and the hydraulic fluid accumulator (18) is integrated into the heat exchanger (20) which constitutes a cover of the hydraulic fluid accumulator (18).

## Revendications

1. Moteur d'avion (1) comprenant un dispositif d'alimentation en carburant (21) et au moins un circuit de fluide hydraulique (19), comprenant un réservoir de fluide hydraulique (18), et un échangeur de chaleur (20) dans la zone duquel de l'énergie thermique peut être échangée entre le fluide hydraulique transporté dans le circuit de fluide hydraulique et le carburant du dispositif d'alimentation en carburant (21), la pression dans le circuit de fluide hydraulique (19) dans la zone de l'échangeur de chaleur (20) étant supérieure à la pression dans le dispositif d'alimentation en carburant (21) pendant le fonctionnement, **caractérisé en ce que** l'échangeur de chaleur (20) est relié au réservoir de fluide hydraulique (18), les parois extérieures (39) de l'échangeur de chaleur (20) et les parois extérieures (38) du réservoir de fluide hydraulique (18) protégeant au moins partiellement une zone de chevauchement (71) entre l'échangeur de chaleur (20) et le réservoir de fluide hydraulique (18) par rapport à l'environnement de l'échangeur de chaleur (20) et du réservoir de fluide hydraulique (18).

2. Moteur d'avion selon la revendication 1, **caractérisé en ce que** les parois extérieures (38, 39) du réservoir de fluide hydraulique (18) et de l'échangeur de chaleur (20) sont conçues chacune pour être ignifuges.

3. Moteur d'avion selon la revendication 1 ou 2, **caractérisé en ce qu'**un espace intérieur (40) du réservoir de fluide hydraulique (18) est séparé de l'espace intérieur (42) de l'échangeur de chaleur (20) par une paroi commune (41).

4. Moteur d'avion selon l'une des revendications 1 à 3, **caractérisé en ce que** l'échangeur de chaleur (20) est relié au réservoir de fluide hydraulique (18) par un dispositif à bride (37).

5. Moteur d'avion selon l'une des revendications 1 à 4, **caractérisé en ce que** le circuit de fluide hydraulique (19) comporte une pompe hydraulique (22) dont le côté aspiration (23) est relié au moins au réservoir de fluide hydraulique (18) et dont le côté refoulement (25) est relié à l'échangeur de chaleur (20).

6. Moteur d'avion selon la revendication 5, **caractérisé en ce que** le fluide hydraulique qui peut être fourni à l'échangeur de chaleur (20) par la pompe hydraulique (22) peut être refoulé de l'échangeur de chaleur (20) en direction des chambres de palier (24) du moteur d'avion (1).

7. Moteur d'avion selon la revendication 5 ou 6, **caractérisé en ce que** le côté aspiration (23) de la pompe hydraulique (22) est relié à un carter d'huile d'une boîte d'accessoires (13).

8. Moteur d'avion selon la revendication 7, **caractérisé en ce que** la boîte d'accessoires (13) peut être alimenté en fluide hydraulique provenant de l'échangeur de chaleur (20) par la pompe hydraulique (22).

9. Moteur d'avion selon l'une des revendications 6 à 8, **caractérisé en ce que** le côté aspiration (23) de la pompe hydraulique (22) est relié aux chambres de palier (24) du moteur d'avion (1).

10. Moteur d'avion selon l'une des revendications 5 à 9, **caractérisé en ce que** le côté refoulement (25) de la pompe hydraulique (22) est accouplé au réservoir de fluide hydraulique (18).

11. Moteur d'avion selon l'une des revendications 1 à 10, **caractérisé en ce qu'**un autre circuit de fluide hydraulique est pourvu d'un autre réservoir de fluide hydraulique, le côté d'aspiration d'une pompe hydraulique de l'autre circuit de fluide hydraulique étant relié à l'autre réservoir de fluide hydraulique et le côté refoulement de la pompe hydraulique étant relié à l'échangeur de chaleur.

12. Moteur d'avion selon la revendication 11, **caractérisé en ce que** le côté refoulement de la pompe hydraulique de l'autre circuit de fluide hydraulique est relié par le biais de l'échangeur de chaleur à un générateur du moteur d'avion qui est accouplé à son tour au côté aspiration de la pompe hydraulique et à l'autre réservoir de fluide hydraulique.

13. Moteur d'avion selon l'une des revendications 1 à 12, **caractérisé en ce que** le dispositif d'alimentation en carburant (21) comprend une unité de pompe à carburant (16) par le biais de laquelle le carburant peut être guidé depuis un réservoir de carburant (27) à travers l'échangeur de chaleur (20).

14. Moteur d'avion selon la revendication 13, **caractérisé en ce que** le carburant peut être guidé par l'unité de pompe à carburant (26) depuis l'échangeur de chaleur (20) en direction du réservoir de carburant (27) et en direction d'une unité de traitement de carburant (28) puis en direction d'une chambre de combustion de moteur d'avion (7).

15. Moteur d'avion selon l'une des revendications 5 à 14, **caractérisé en ce qu'**au moins une conduite de fluide hydraulique (48) s'étendant entre la pompe hydraulique (22) et le réservoir de fluide hydraulique (18) est intégrée dans l'échangeur de chaleur (20) qui est un couvercle du réservoir de fluide hydraulique (18).
